# EUROPÄISCHE PATENTSCHRIFT

(11) **EP 1 828 726 B1**
(45) Veröffentlichungstag und Bekanntmachung des Hinweises auf die Patenterteilung: **11.05.2016**
(21) Anmeldenummer: 05819219.6
(22) Anmeldetag: 14.12.2005
(51) Int. Cl.: C08G 18/48, C09D 175/04, G01F 1/58, C08G 18/76

(54) **IN-LINE-MESSGERÄT MIT EINEM MESSROHR UND VERFAHREN ZU DESSEN HERSTELLUNG**
IN-LINE MEASURING DEVICE WITH A MEASURING TUBE AND METHOD FOR PRODUCTION THEREOF
APPAREIL DE MESURE EN LIGNE POURVU D'UN TUBE DE MESURE ET PROCEDE DE FABRICATION ASSOCIE

(30) Priorität: 21.12.2004 DE 102004062680; 03.02.2005 DE 102005005195
(43) Veröffentlichungstag der Anmeldung: 05.09.2007
(73) Patentinhaber: Endress+Hauser Flowtec AG, 4153 Reinach (CH)
(72) Erfinder: SULZER, Thomas, 79639 Grenzach-Wyhlen (DE); RUCHEL, Johannes, CH-4144 Arlesheim (CH)
(74) Vertreter: Andres, Angelika Maria
(86) Internationale Anmeldenummer: PCT/EP2005/056784
(87) Internationale Veröffentlichungsnummer: WO 2006/067077

(56) Entgegenhaltungen:
- EP-A- 0 409 300
- WO-A2-02/10244
- US-A- 5 567 763
- US-A- 5 648 421
- US-A- 5 915 280

## Beschreibung

Die Erfindung betrifft ein In-Line-Meßgerät, insb. ein Durchflußmeßgerät, zum Messen eines in einer Rohrleitung strömenden Fluids, wobei das In-Line-Meßgerät einen, insb. magnetisch-induktiven, Meßaufnehmer mit einem in den Verlauf der Rohrleitung eingefügten, innen mit einem Liner ausgekleideten Meßrohr zum Führen des zu messenden Fluids umfaßt, und wobei der Liner aus einem Polyurethan besteht, das unter Verwendung eines metall-organische Verbindungen aufweisenden Katalysators hergestellt ist. Ferner betrifft die Erfindung ein Verfahren zur Herstellung des vorgenannten In-Line-Meßgeräts.

Mittels In-Line-Meßgeräten mit einem magnetisch-induktiven Meßaufnehmer lassen sich bekanntlich die Strömungsgeschwindigkeit und/oder der Volumendurchfluß eines elektrisch leitfähigen Fluids messen, das ein Meßrohr des Meßaufnehmers in einer Strömungsrichtung durchströmt. Hierzu wird im magnetisch-induktiven Meßaufnehmer mittels zumeist einander diametral gegenüberliegende Feldspulen einer an eine Erreger-Elektronik des In-Line-Meßgeräts elektrisch angeschlossenen Magnetkreisanordnung ein Magnetfeld erzeugt, das das Fluid innerhalb eines vorgegebenen Meßvolumens zumindest abschnittsweise senkrecht zur Strömungsrichtung durchsetzt und das sich im wesentlichen außerhalb des Fluids schließt. Das Meßrohr besteht daher üblicherweise aus nicht-ferromagnetischem Material, damit das Magnetfeld beim Messen nicht ungünstig beeinflußt wird. Infolge der Bewegung der freien Ladungsträger des Fluids im Magnetfeld wird nach dem magnetohydrodynamischen Prinzip im Meßvolumen ein elektrisches Feld erzeugt, das senkrecht zum Magnetfeld und senkrecht zur Strömungsrichtung des Fluids verläuft. Mittels wenigstens zweier in Richtung des elektrischen Feldes voneinander beabstandet angeordneter Meßelektroden und mittels einer an diese angeschlossenen Auswerte-Elektronik des In-Line-Meßgeräts ist somit eine im Fluid induzierte elektrische Spannung meßbar, die wiederum ein Maß für den Volumendurchfluß ist. Zum Abgreifen der induzierten Spannung können beispielsweise das Fluid berührende, galvanische oder das Fluid nicht berührende, kapazitive Meßelektroden dienen. Zum Führen und Einkoppeln des Magnetfeldes in das Meßvolumen umfaßt die Magnetkreisanordnung üblicherweise von den Feldspulen umhüllte Spulenkerne, die entlang eines Umfanges des Meßrohrs insb. diametral, voneinander beabstandet und mit jeweils einer freien endseitigen Stirnfläche, insb. spiegelbildlich, zueinander angeordnet sind. Im Betrieb wird somit das mittels der an die Erreger-Elektronik angeschlossenen Feldspulen erzeugte Magnetfeld über die Spulenkerne so in das Meßrohr eingekoppelt, daß es das zwischen beiden Stirnflächen hindurchströmende Fluid wenigstens abschnittsweise senkrecht zur Strömungsrichtung durchsetzt.

Als Alternative zu In-Line-Meßgeräten mit magnetisch-induktiven Meßaufnehmern werden oftmals auch mittels Ultraschall akustisch messende In-Line-Meßgeräten zur Messung von Strömungsgeschwindigkeiten und/oder Volumendurchflüssen strömender Fluide verwendet.

Aufgrund der geforderten hohen mechanischen Stabilität für solche Meßrohre, bestehen diese - sowohl bei magnetisch-induktiv als auch für akustisch messenden Meßaufnehmern - zumeist aus einem äußeren, insb. metallischen, Trägerrohr von vorgebbarer Festigkeit und Weite, das innen mit einem elektrisch nicht leitenden Isoliermaterial von vorgebbarer Dicke, dem sogenannten Liner, beschichtet ist. Beispielsweise sind in der
US-B 65 95 069, der US-A 56 64 315, der US-A 52 80 727, der
US-A 46 79 442, der US-A 42 53 340, der US-A 32 13 685 oder der

JP-Y 53 - 51 181 jeweils magnetisch-induktive Meßaufnehmer beschrieben, die ein in eine Rohrleitung fluiddicht einfügbares, ein einlaßseitiges erstes Ende und ein auslaßseitiges zweites Ende aufweisendes Meßrohr mit einem nicht-ferromagnetischen Trägerrohr als eine äußere Umhüllung des Meßrohrs, und einem in einem Lumen des Trägerrohrs untergebrachten, aus einem Isoliermaterial bestehenden rohrförmigen Liner zum Führen eines strömenden und vom Trägerrohr isolierten Fluids umfassen.

Der üblicherweise aus einem thermoplastischen, duroplastischen oder elastomeren Kunststoff bestehende Liner dient der chemischen Isolierung des Trägerrohrs vom Fluid. Bei magnetisch-induktiven Meßaufnehmern, bei denen das Trägerrohr eine hohe elektrische Leitfähigkeit aufweist, beispielsweise bei Verwendung metallischer Trägerrohre, dient der Liner außerdem als elektrische Isolierung zwischen dem Trägerrohr und dem Fluid, die ein Kurzschließen des elektrischen Feldes über das Trägerrohr verhindert. Durch eine entsprechende Auslegung des Trägerrohrs ist insoweit also eine Anpassung der Festigkeit des Meßrohrs an die im jeweiligen Einsatzfall vorliegenden mechanischen Beanspruchungen realisierbar, während mittels des Liners eine Anpassung des Meßrohr an die für den jeweiligen Einsatzfall geltenden chemischen und/oder biologischen Anforderungen realisierbar ist.

Wegen seiner guten Verarbeitbarkeit einerseits und seinen guten chemischen und mechanischen Eigenschaften anderseits haben sich neben Hartgummi oder fluorhaltigen Kunststoffen, wie z.B. PTFE, PFA, in besonderem Maße auch Polyurethane als Material für Liner von In-Line-Meßgeräten, insb. solchen mit magnetisch-induktivem Meßaufnehmer, etabliert. Zudem weisen Liner aus Polyurethan, insb. auch in bakteriologischer Hinsicht, zumeist gute biologische Eigenschaften auf und sind insoweit auch gut für die Anwendung auf wäßrige Fluide geeignet.

Bei den für die Herstellung von Linern der beschriebenen Art verwendeten Polyurethanen handelt es sich zumeist um elastomere Kunststoffe, die auf Basis eines unmittelbar vor der Verarbeitung aus reaktiven Ausgangskomponenten gebildeten, flüssigen Mehrkomponentensystems hergestellt sind, wobei letzteres jeweils nach dem Zusammenmischen auf die zuvor mit Haftvermittler behandelte Innenwand des Trägerrohrs appliziert und dort innerhalb einer vorgebbaren Reaktionszeit zum Liner aushärten gelassen wird. Polyurethane werden bekanntlich nach dem Polyadditionsverfahren aus Di- und Poly-Isocyanaten mit zwei- oder mehrwertigen Alkoholen hergestellt. Als Ausgangskomponenten können dabei beispielsweise Präpolymere, aufgebaut aus aliphatischen und/oder aromatischen Ether-Gruppen sowie Glycol- und Isocyanat-Gruppen dienen, die mit dem zugeführten zwei- oder mehrwertigen Alkohohl reagieren können.

Zur Fertigung von aus Polyurethan bestehenden Linern wird oftmals ein sogenanntes Ribbon-flow-Verfahren angewendet, bei dem das zuvor hergestellte flüssige Mehrkomponentensystem mittels eines entsprechenden Gieß- oder Sprühkopf auf der in geeigneter Weise bewegten Innenwand des Trägerrohrs gleichmäßig verteilt wird. Die danach für das Aushärten erforderliche Reaktionszeit des Mehrkomponentensystems kann neben der Dosierung der Ausgangskomponenten in erheblichem Maße auch durch eine geeignete Führung der Verarbeitungstemperatur eingestellt werden. Allerdings lassen sich kurze Reaktionszeiten von weniger als einer Minute, wie sie für eine kostengünstige Herstellung des Liners auf einer etwa bei Raumtemperatur liegenden Verarbeitungstemperatur erforderlich sind, üblicherweise lediglich durch Beigabe eines geeigneten zumeist schwermetall- und/oder aminhaltigen Katalysators zum Mehrkomponentensystem erzielen. Als Katalysatoren kommen dabei im besonderen tertiäre Amine und/oder Quecksilber zum Einsatz. In Anbetracht dessen, daß der Katalysator selbst im wesentlichen unverändert im fertigen Polyurethan verbleibt, weist letzteres insoweit zwangsläufig auch toxische, zumindest aber physiologisch nicht völlig unbedenkliche Verbindungen auf. Zahlreiche Untersuchungen haben zudem gezeigt, daß besonders der Katalysator zumindest bei Anwesenheit von Wasser in erheblichem Maße aus dem Liner herausgelöst werden kann. Insoweit sind die derzeit in In-Line-Meßgeräten verwendeten Polyurethane nur bedingt für Anwendungen mit hohen hygienischen Anforderungen, wie z.B. für Messungen im Trinkwasserbereich, geeignet, da die im Trinkwasserbereich für fluidberührende Bauteile gestellten hohen Anforderungen hinsichtlich der chemischen Beständigkeit sowie der physiologischen Verträglichkeit nicht mehr ohne weiteres erfüllt werden können. Besonderes Augenmerk wird im Trinkwasserbereich u.a. auf die Einhaltung der maximal tolerierbaren Migrationsrate (M_{max,TOC}) hinsichtlich eines gesamtorganischen Kohlenstoffgehaltes (TOC) und/oder der für toxikologisch kritische Substanzen definierten spezifischen Migrationsgrenzwerte (SML) gelegt. Gleichermaßen streng sind die Anforderungen hinsichtlich der Wirkung des Liners auf die äußere Beschaffenheit von Trinkwasser, insb. hinsichtlich der Geschmacks-, Färbungs- Trübungs- und/oder Geruchsneutralität des Liners bei Anwesenheit von Wasser, sowie hinsichtlich der maximal tolerierbarer Chlorzehrungsraten (M_{max, Cl}).

Eine Aufgabe der Erfindung besteht daher darin, ein In-Line-Meßgerät mit einem, insb. magnetisch-induktiven, Meßaufnehmer mit einem dessen Meßrohr innen auskleidenden Liner anzugeben, der gute physiologische, organo-leptische wie auch bakteriologische Eigenschaften aufweist. Zudem soll das In-Line-Meßgerät, bei Verwendung von Polyurethan als Material für den Liner, möglichst auch den für Trinkwasseranwendungen gestellten hohen chemisch-biologischen und hygienischen Anforderungen genügen können.

Zur Lösung der Aufgabe besteht die Erfindung in einem In-Line-Meßgerät, insb. einem Durchflußmeßgerät, zum Messen eines in einer Rohrleitung strömenden Trinkwassers, welches In-Line-Meßgerät einen, insb. magnetisch-induktiven oder akustischen, Meßaufnehmer mit einem in den Verlauf der Rohrleitung eingefügten, innen mit einem Liner ausgekleideten Meßrohr zum Führen des zu messenden Fluids umfaßt. Der Liner des erfindungsgemäßen In-Line-Meßgeräts besteht aus einem Polyurethan, das unter Verwendung eines Zinn-organo-Verbindungen aufweisenden Katalysators hergestellt ist, wobei die Bestandteile des Polyurethans so gewählt sind, daß mit dem Katalysator in den Liner eingebrachte und daselbst verbliebene Metalle physikalisch und/oder chemisch, insb. atomar, an im Liner gebildete Kohlenstoffketten gebunden sind. Ferner besteht die Erfindung darin, ein solches In-Line-Meßgerät zum Messen eines Durchflusses und/oder einer Strömungsgeschwindigkeit von in einer Rohrleitung strömendem Wasser, insb. Trinkwasser, zu verwenden.

Darüber hinaus besteht die Erfindung in einem Verfahren zum Herstellen eines Meßrohrs für ein In-Line-Meßgerät für Messungen im Trinkwasserbereich. Das erfindungsgemäße Verfahren umfaßt einen Schritt des Bildens eines flüssigen Mehrkomponentensystems, das ein Präpolymer, einen, insb. zweiwertigen, Alkohohl und einen Katalysator aufweist, wobei der Katalysator, insb. von einem physiologisch unbedenklichen Metall gebildete, metall-organische Verbindungen, nämlich Zinn-organo- Verbindungen aufweist. Darüber hinaus umfaßt das erfindungsgemäße Verfahren die Schritte des Aufbringens des flüssigen Mehrkomponentensystems auf eine Innenwand eines, insb. metallischen, als Bestandteil des Meßrohrs dienenden Trägerrohrs sowie des Aushärtenlassens des Mehrkomponentensystems auf der Innenwand des Trägerrohrs zum Bilden eines das fertige Meßrohr innen auskleidenden Liners.

Nach einer ersten Ausgestaltung des In-Line-Meßgeräts der Erfindung ist das Polyurethan auf Basis eines Mehrkomponentensystems hergestellt, das mittels eines Präpolymers, mittels eines, insb. zweiwertigen, Alkohols sowie mittels des Katalysators gebildet ist.

Nach einer zweiten Ausgestaltung des In-Line-Meßgeräts der Erfindung weist das verwndete Präpolymer, insb. aliphatische, Ether-Gruppen auf.

Nach einer dritten Ausgestaltung des In-Line-Meßgeräts der Erfindung weist das verwendete Präpolymer aromatische Verbindungen auf.

Nach einer vierten Ausgestaltung des In-Line-Meßgeräts der Erfindung enthält der für die Herstellung des Polyurethans verwendete Katalysator keine Amine, so daß auch der Liner selbst frei von Aminen ist.

Nach einer fünften Ausgestaltung des In-Line-Meßgeräts der Erfindung enthält der für die Herstellung des Polyurethans verwendete Katalysator keine Schwermetalle, so daß auch der Liner selbst frei von Schwermetallen ist.

Nach einer sechsten Ausgestaltung des In-Line-Meßgeräts der Erfindung enthält der für die Herstellung des Polyurethans verwendete Katalysator Zinn und weist der Liner atomisch gebundenes Zinn auf.

Nach einer siebenten Ausgestaltung des In-Line-Meßgeräts der Erfindung weist der Liner eine Dicke von weniger als 5 mm, insb. weniger als 3 mm auf.

Nach einer achten Ausgestaltung des In-Line-Meßgeräts der Erfindung weist das Meßrohr eine Nennweite auf, die kleiner oder gleich 2000 mm ist.

Nach einer neunten Ausgestaltung des In-Line-Meßgeräts der Erfindung weist das Meßrohr eine Nennweite auf, die größer oder gleich 100 mm ist.

Nach einer Weiterbildung des In-Line-Meßgeräts der Erfindung umfaßt der Meßaufnehmer eine am Meßrohr angeordnete Magnetkreisanordnung zum Erzeugen und Führen eines magnetischen Feldes, das im strömenden Fluid ein elektrisches Feld induziert, und Meßelektroden zum Abgreifen einer im strömenden Fluid induzierten elektrischen Spannung.

Nach einer ersten Ausgestaltung des Verfahrens der Erfindung weist der verwendete Katalysator zinn-organo Verbindungen, wie z.B. Din-octylzinn-Verbindungen, auf.

Nach einer zweiten Ausgestaltung des Verfahrens der Erfindung handelt es sich bei dem Katalysator um ein Di-n-octylzinndilaurat und/oder ein Di-n-octylzinndimalinat.

Nach einer dritten Ausgestaltung des Verfahrens der Erfindung weist das Präpolymer, insb. aliphatische und/oder aromatische, Ether-Gruppen auf.

Nach einer vierten Ausgestaltung des Verfahrens der Erfindung weist das Präpolymer aromatische oder aliphatische Isocyanat-Gruppen auf.

Nach einer fünften Ausgestaltung des Verfahrens der Erfindung weist das Präpolymer mindestens zwei reaktive NCO-Gruppen auf.

Nach einer sechsten Ausgestaltung des Verfahrens der Erfindung weist der Alkohol mindestens zwei funktionelle OH-Gruppen auf.

Nach einer siebenten Ausgestaltung des Verfahrens der Erfindung handelt es sich bei dem Alkohol um ein Diol, insb. ein Butandiol.

Nach einer achten Ausgestaltung des Verfahrens der Erfindung wird dieses bei einer Verarbeitungstemperatur von weniger als 100°C, insb. bei etwa 25°C, durchgeführt.

Ein Grundgedanke der Erfindung besteht darin, zur Fertigung des Liners ein Polyurethan zu verwenden, das mit Hilfe eines metall-organischen, jedoch aminfreien und/oder schwermetallfreien Katalysators hergestellt ist. Darüber hinaus geht es bei der Erfindung darum, solch ein Polyurethan für den Liner zu verwenden, daß seitens des bei der Fertigung eingesetzten Katalysators in den Liner eingebrachte Metalle beispielsweise durch Cross-Linking physikalisch und/oder chemisch, insb. atomisch, an Kohlenstoffketten gebunden und insoweit eher beständig und dauerhaft im Liner eingebettet sind. Somit kann sichergestellt werden, daß im Betrieb des In-Line-Meßgeräts vom Liner, wenn überhaupt, nur sehr geringe Mengen an Metallen oder Metallverbindungen in physiologisch unbedenklichen Raten in das zu messende Fluid abgegeben werden. Ferner kann bei Verwendung von physiologisch unbedenklichen Nicht-Schwermetallen, wie z.B. Zinn, für den Katalysator praktisch ein "eigensicheres" Polyurethan gebildet werden, so daß also selbst bei einem allfälligen Herauslösen von mit dem Katalysator eingebrachten Metallen bzw. Metallverbindungen durch das zu messende Fluid sichergestellt werden kann, daß dadurch zumindest keine hygienisch inakzeptable Verunreinigung des Fluids verursacht wird.

Die Erfindung und vorteilhafte Ausgestaltungen werden nachfolgend anhand der Figuren der Zeichnung näher erläutert. Gleiche Teile sind mit gleichen Bezugszeichen versehen. Falls es die Übersichtlichkeit jedoch erfordert, sind Bezugszeichen in nachfolgenden Figuren weggelassen.

Fig. 1 zeigt perspektivisch in einer Seitenansicht ein Meßrohr für ein, insb. magnetisch-induktives, In-Line-Meßgerät, und

Fig. 2 zeigt in einem Längsschnitt das Meßrohr von Fig. 1.

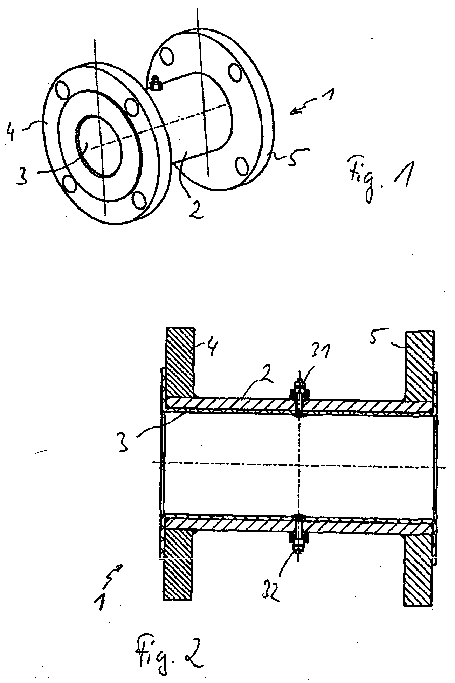

In den Fig. 1 und 2 ist in verschiedenen Ansichten ein Meßrohr für einen Meßaufnehmer eines In-Line-Meßgeräts dargestellt, das dazu dient, ein in einer - hier nicht dargestellten - Rohrleitung strömendes Fluid zu messen, beispielsweise dessen Strömungsgeschwindigkeit und/oder dessen Volumendurchflußrate. Bei dem In-Line-Meßgerät kann es sich beispielsweise um ein magnetisch-induktiv messendes oder auf Basis von Ultraschall akustisch messendes Durchflußmeßgerät handeln. Im besonderen ist das In-Line-Meßgerät dafür vorgesehen, in Trinkwasser-Netzen eingesetzt zu werden.

Das Meßrohr 1 weist ein, insb. metallisches, Trägerrohr 2 von vorgebbarem Lumen und einen rohrförmigen, aus einem Isoliermaterial bestehenden Liner 3 von vorgebbarer Weite auf. Das Trägerrohr 2 besteht aus einem nicht-ferromagnetischen Material, wie z.B. Edelstahl oder einem anderen rostfreien Metall, und umschließt den Liner 3 koaxial, so daß dieser das Trägerrohr 2 innen vollständig auskleidet und insoweit vom im Betrieb hindurchströmenden Fluid praktisch völlig isoliert.

Der Liner 3 des erfindungsgemäßen In-Line-Meßgeräts besteht aus einem Polyurethan, daß beispielsweise in einem Schleuder-Verfahren oder in einem sogenannten Ribbon-Flow-Verfahren auf die Innenwand des Trägerrohrs appliziert und dort flächendeckend und möglichst gleichmäßig verteilt worden ist. Beispielsweise kann als Material für den Liner 3 ein solches Polyurethan verwendet werden, daß aliphatische und/oder aromatische Ether-Gruppen aufweist.

Nach einer Ausgestaltung der Erfindung ist das Meßrohr für die Verwendung in einem In-Line-Meßgerät mit einem magnetisch-induktiven Meßaufnehmer vorgesehen. Dementsprechend umfaßt der Meßaufnehmer ferner eine am Meßrohr angeordnete Magnetkreisanordnung zum Erzeugen und Führen eines magnetischen Feldes, das im strömenden - hier elektrisch leitfähigen - Fluid eine elektrische Spannung induziert, sowie Meßelektroden zum Abgreifen von im strömenden Fluid induzierten Spannungen. Die Magnetkreisanordnung weist üblicherweise zwei Feldspulen auf, die im Meßbetrieb mit einer - hier nicht dargestellten - dem Erzeugen veränderlicher elektrischer Ströme von vorgebbarer Stromstärke dienenden Erreger-Elektronik des In-Line-Meßgeräts verbunden und zumindest zeitweise von einem entsprechenden Erregerstrom durchflossen sind. Das dadurch erzeugte Magnetfeld durchsetzt das innerhalb des Meßrohrs 1 strömende Fluid zumindest abschnittsweise senkrecht zu dessen Strömungsrichtung. Zum Abgreifen der im strömenden Fluid entsprechend induzierten elektrischen Spannung weist der Meßaufnehmer eine am Meßrohr 1 angebrachte Sensoranordnung auf, die eine erste und eine zweite Meßelektrode 31, 32 umfaßt. Diese liegen einander diametral gegenüber, wobei ein die Meßelektroden imaginär verbindender Durchmesser des Meßrohrs 1 zu einem die Feldspulen imaginär verbindenden Durchmesser des Meßrohrs 1 senkrecht verläuft. Selbstverständlich können die Meßelektroden 31, 32, falls erforderlich, insb. bei mehr als zwei Meßelektroden, am Meßrohr 1 so voneinander beabstandet angeordnet werden, daß sie sich nicht diametral gegenüberliegen. Dies kann z.B. dann der Fall sein, wenn zusätzliche Meßelektroden für Referenzpotentiale oder bei waagerechter Einbaulage des Meßrohrs 1 Meßelektroden zur Überwachung eines Mindestfüllstandes des Fluids im Meßrohr 1 vorgesehen sind. Zum fluiddichten Einfügen in die Rohrleitung weist das Meßrohr 1 ferner an einem ersten Meßrohrende einen ersten Flansch 4 und an einem zweiten Meßrohrende einen zweiten Flansch 5 auf. Trägerohr 2 und Flansche 4, 5 sind jeweils von kreisförmigem Querschnitt.

Bei der Herstellung des Meßrohrs 1 selbst wird zunächst das Trägerrohr 2 mit der gewünschten Länge bereitgestellt, und es werden die Metallflansche 4, 5 entsprechend vorbereitet Dann wird an jedem Ende des Trägerrohrs 2 jeweils einer der Flansche 4, 5 so über dessen Außenseite geschoben. Daraufhin wird eine jeweilige Rückseite des jeweiligen Metallflansches 4, 5 mit der Außenseite des Trägerrohrs 2 mechanisch fest und dicht verbunden. Dies kann bei Verwendung eines metallischen Trägerrohrs und metallischer Flansche beispielsweise durch Löten, Hartlöten oder Schweißen geschehen, was zu einer entsprechenden Löt-, Hartlöt- oder Schweißnaht 6 führt. Der von den Flanschen 4, 5 und dem Trägerrohr 2 gebildete Zwischenraum - kann wie im besonderen bei magnetisch-induktiven Meßaufnehmern üblich - mittels eines umlaufenden Bleches verschlossen werden. Der Zwischenraum kann für den Fall, daß das Meßrohr für einen magnetisch-induktiven Meßaufnehmer verwendet werden soll, beispielsweise zur Aufnahme der das erwähnte Magnetfeld erzeugenden Feldspulen und weiterer Komponenten der erwähnten Magnetkreisanordnung dienen. Wenn das Blech dabei als Bestandteil des Magnetkreises dienen soll, ist es vorzugsweise ferromagnetisch auszubilden.

Wie bereits angedeutet, dient das In-Line-Meßgerät im besonderen auch dazu, solche Fluide zu messen, die erhöhten Anforderungen hinsichtlich chemisch-biologischer wie auch bakteriologischer Reinheit unterworfen sind, wie z.B. Trinkwasser. Daher wird zur Herstellung des für den Liner verwendeten Polyurethans auf die Verwendung eines schwermetallhaltigen und/oder eines aminhaltigen Katalysators verzichtet, obgleich diese Arten von Katalysatoren wegen ihrer guten Reaktivität für die Herstellung des Polyurethans eigentlich sehr vorteilhaft wären. Vielmehr wird beim erfindungsgemäßen In-Line-Meßgerät für die Herstellung von dessen Liner ein Polyurethan verwendet, daß mit Hilfe eines metall-organische Verbindungen aufweisenden Katalysators (C) gebildet ist. Darüber hinaus ist das Polyurethan so gewählt, daß die mit dem Katalysator (C) in den Liner eingebrachten und dort verbliebenen Metalle (Me) chemisch, insb. atomisch, und/oder physikalisch, insb. durch Cross-Linking, an im Liner gebildete Kohlenstoffketten gebunden sind. Ein Vorteil dieses Katalysators besteht darin, daß dessen Organo-Metall-Verbindungen derart in das Material des Liners eingebaut werden, daß auch unter Einwirkung von Wasser im Betrieb des In-Line-Meßgeräts - wenn überhaupt - allenfalls in physiologisch unbedenklichen Mengen und Raten des Katalysators aus dem Liner ausgelöst werden.

Nach einer Ausgestaltung der Erfindung enthält der für die Herstellung des Polyurethans verwendete Katalysator Zinn-organo-Verbindungen, insb. Din-octylzinn-Verbindungen, wodurch sichergestellt werden kann, daß das über den Katalysator in den fertigen Liner eingebrachte und dort verbliebene Zinn (Sn) chemisch und/oder physikalisch im Liner selbst chemisch gebunden und insoweit dauerhaft eingebettet ist. Nach einer Ausgestaltung der Erfindung wird folgende Zinn-organo-Verbindung als Katalysator (C) zur Herstellung des Polyurethans für den Liner 3 verwendet:

C₄₀H₈₀O₄Sn (1)

Als besonders vorteilhafter Katalysator für die Herstellung des Liners hat sich beispielsweise Di-n-octylzinndilaurat (DOTL) erwiesen, dessen Struktur sich schematisch wie folgt darstellen läßt:

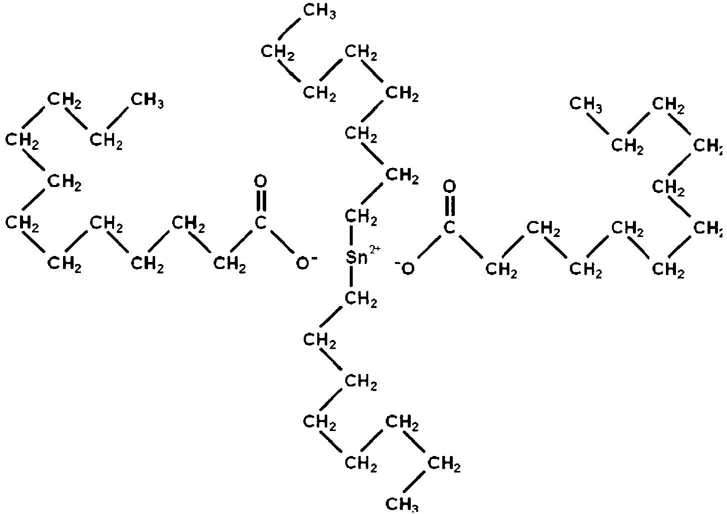

Darüber hinaus können beispielsweise auch Dioctylzinndimalinate oder ähnlich metall-organische Verbindungen als Katalysatoren (C) für die Herstellung des Liners verwendet werden.

Nach einer Ausgestaltung der Erfindung handelt es sich bei dem Polyurethan um ein Elastomere, das auf Basis eines Mehrkomponentensystems (A+B+C) hergestellt ist, welches mittels eines Präpolymers (A) und eines, insb. zwei- oder mehrwertigen, Alkohols (B) sowie unter Verwendung des Katalysators (C) gebildet worden ist. Beispielsweise kann es sich bei dem Polyurethan um ein Elastomere handeln, das zumindest anteilig im wesentlichen folgende Struktur aufweist:

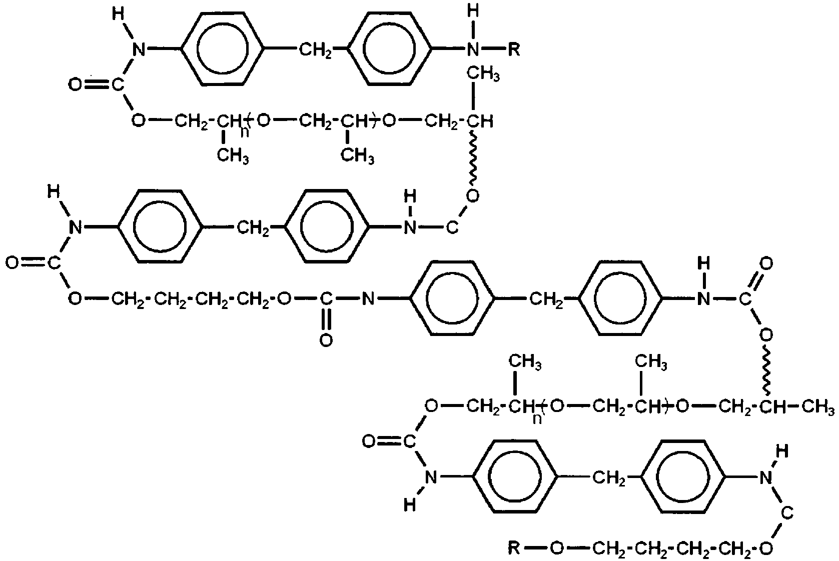

Nach einer weiteren Ausgestaltung der Erfindung handelt es sich bei dem für die Herstellung des Liners 3 verwendeten Alkohol (B) um einen solchen mit mindestens zwei funktionellen OH-Gruppen, beispielsweise ein Diol. Besonders gute Ergebnisse lassen sich hierbei durch Verwendung eines Butandiol erzielen.

Des weiteren haben sich Präpolymere (A) mit aromatischen oder aliphatischen Isocyanat-Gruppen, insb. mit zwei oder mehr reaktiven NCO-Gruppen, als besonders vorteilhaft für die Herstellung des Liners 3 gezeigt. Nach einer anderen vorteilhaften Ausgestaltung der Erfindung ist das Präpolymer hierbei zumindest anteilig gemäß folgender Strukturformel aufgebaut:

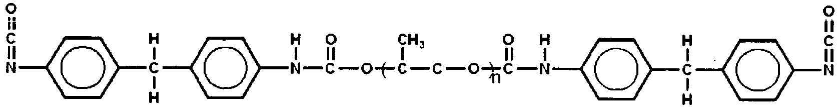

Zur Herstellung eines solchen Präpolymers wird gemäß einer Weiterbildung der Erfindung ein Polypropylenoxid verwendet, das mit einem, insb. überschüssig zugegebenen, aromatischen Diisocyanat reagieren gelassen wird.

Gemäß einer weiteren Ausgestaltung der Erfindung wird als Polypropylenoxid ein Polypropylenglykol (PPG) verwendet, dessen Struktur vereinfacht etwa wie folgt beschrieben werden kann:

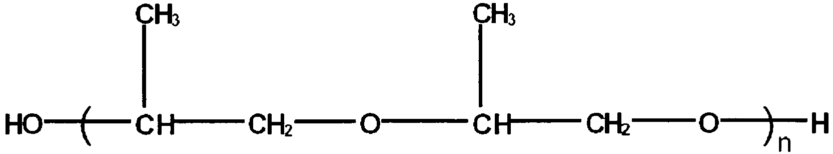

Alternativ oder in Ergänzung zum Polypropylenoxid kann beispielsweise auch ein Polytetramethylenetherglykol (PTMEG) mit folgendem strukturellen Aufbau zur Herstellung des Präpolymers dienen:

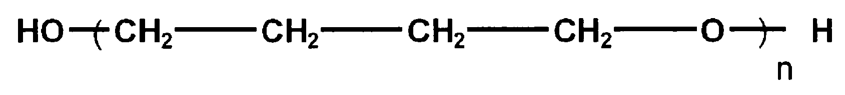

Darüber hinaus - alternativ oder in Ergänzung - können aber auch andere aliphatisch aufgebaute Glykol-Verbindungen mit polymeren Ether-Gruppe und endständigen OH-Gruppen zur Herstellung des Präpolymers verwendete werden.

Nach einer anderen Ausgestaltung der Erfindung handelt es sich bei dem für die Herstellung des Präpolymers verwendeten aromatischen Diisocyanat um ein Diphenylmethan-diisocyanat (MDI), insb. mit wenigstens einer der folgenden Strukturen:

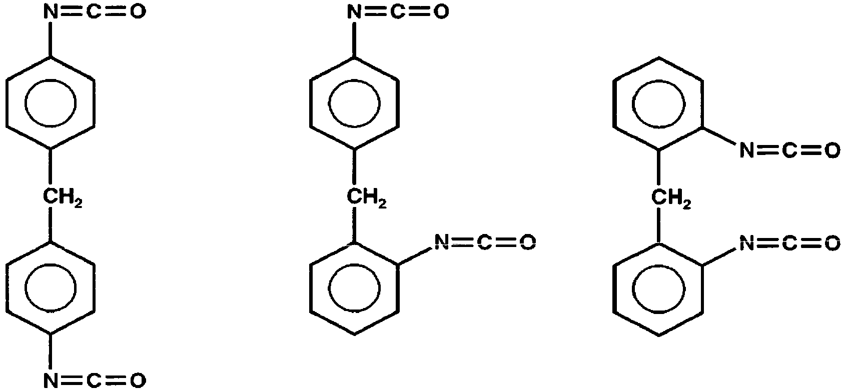

Zum Herstellen des Liners wird nach einer Weiterbildung der Erfindung zunächst mittels des flüssigen Präpolymers (A), des Alkohohls (B) sowie unter Beigabe des Katalysators (C) das Mehrkomponentensystem (A+B+C) gebildet. Das ebenfalls im wesentlichen noch flüssige Mehrkomponentensystem (A+B+C) wird dann, beispielsweise im sogenannten Ribbon-Flow-Verfahren unter Verwendung eines innerhalb des Lumens des Trägerrohrs 2 verfahrbaren Gieß- oder Sprühkopfs auf eine Innenwand des Trägerrohrs 2 appliziert. Durch gleichzeitiges Rotierenlassen des Trägerrohrs 2 um seine Längsachse und Verfahren des Gieß- oder Sprühkopfs im wesentlichen parallel zur Längsachse kann das flüssige Mehrkomponentensystem (A+B+C) auf sehr einfache sehr und gut reproduzierbare Weise gleichmäßig über die gesamte Innenwand verteilt werden. Unter Einwirkung des Katalysators wird das - hier im Ribbon-Flow-Verfahren - auf das Trägerrohr 2 aufgetragene, immer noch flüssige Mehrkomponentensystem (A+B+C) aushärtengelassen, wodurch schließlich der Liner 3 direkt auf der Innenwand des Trägerrohrs 2 gebildet wird. Vorzugsweise sind Konzentration und Menge des beigegebenen Katalysators (C) dabei so bemessen, daß das auf das Trägerrohr 2 applizierte Mehrkomponentensystem (A+B+C) innerhalb einer vergleichsweise kurzen Reaktionszeit von weniger als einer Minute, insb. unter 30 Sekunden, und bei einer Verarbeitungstemperatur von weniger als 100°C, beispielsweise bei etwa 25°C, aushärten kann.

Experimentelle Untersuchungen haben hierbei ergeben, daß sich, insb. bei Verwendung der oben beschriebene Präpolymere-Systeme (PPG+MDI und/oder PTMEG+MDI), solche kurzen Reaktionszeiten bereits durch Zugabe des Katalysators (C) mit einem Masseanteil von weniger als 2% der Gesamtmasse des Mehrkomponentensystems (A+B+C) erreicht werden können. Weiterführenden Untersuchungen haben ferner ergeben, daß sich besonders gute Ergebnisse bei der Herstellung des Liners 3 erzielen lassen, wenn der Alkohohl (B) dem Präpolymer (A) in einem Mischungsverhältnis B:A von etwa 15:100 oder weniger, insb. einem Mischungsverhältnis B:A von weniger als 10:100, zugegeben wird.

Aufgrund der Verwendung von Polyurethan als Material für den Liner 3 kann das Meßrohr 1 ohne weiteres mit Nennweiten im Bereich zwischen 100 mm und 2000 mm gefertigte werden. Gleichermaßen kann somit, insb. auch unter Anwendung des vorbeschriebenen Ribbon-flow-Verfahrens für die Herstellung des Liners 3, sichergestellt werden, daß der Liner 3 eine möglichst gleichmäßige Dicke von weniger als 5 mm, insb. weniger als 3 mm aufweist.

Ein weiterer Vorteil des erfindungsgemäßen In-Line-Meßgeräts besteht darin, daß es aufgrund der Verwendung des oben beschriebenen Polyurethans für den Liner 3 sogar die für Anwendungen im Trinkwasserbereich gestellten, insb. auch im Vergleich zu anderen Lebensmittelanwendungen, sehr hohen hygienischen Anforderungen erfüllen kann. Untersuchen haben beispielsweise gezeigt, daß die Migrationsrate (M _{max, TOC}) hinsichtlich des gesamtorganischen Kohlenstoffgehaltes (TOC) unterhalb von 0,25 Milligramm pro Liter und Tag liegen kann, während für die Chlorzehrungsrate (M_{max,Cl} ) durchaus Wert von weniger als 0,2 Milligramm pro Liter und Tag erreicht werden können. Insoweit kann das erfindungsgemäße In-Line-Meßgerät beispielsweise auch den mit der einschlägigen "Leitlinie zur hygienischen Beurteilung von Epoxidharzbeschichtungen im Kontakt mit Trinkwasser" an Ausrüstungsgegenstände im Verteilungsnetz, insb. auch in Bauptleitungen und/oder mit dem einschlägigen NSF/ANSI Standard 61 an Trinkwassersystemkomponenten gestellten Forderungen genügen.

## Patentansprüche

1. In-Line-Meßgerät, insb. Durchflußmeßgerät, zum Messen eines in einer Rohrleitung strömenden Trinkwassers, welches In-Line-Meßgerät einen, insb. magnetisch-induktiven oder akustischen, Meßaufnehmer mit einem in den Verlauf der Rohrleitung eingefügten, innen mit einem Liner ausgekleideten Meßrohr zum Führen des zu messenden Fluids umfaßt, wobei der Liner aus einem Polyurethan besteht, das unter Verwendung eines metall-organische Verbindungen, nämlich Zinn-organo-Verbindungen aufweisenden Katalysators hergestellt ist, und wobei mit dem Katalysator in den Liner eingebrachte und dort verbliebene Metalle chemisch, insb. atomisch, und/oder physikalisch an im Liner gebildete Kohlenstoffketten gebunden sind.

2. In-Line-Meßgerät nach Anspruch 1, wobei das Polyurethan auf Basis eines mittels eines Präpolymers, eines, insb. zweiwertigen, Alkohols und des Katalysators gebildeten Mehrkomponentensystems hergestellt ist.

3. In-Line-Meßgerät nach einem der vorherigen Ansprüche, wobei das Polyurethan, insb. aliphatische, Ether-Gruppen aufweist.

4. In-Line-Meßgerät nach einem der vorherigen Ansprüche, wobei das Polyurethan aromatische Verbindungen aufweist.

5. In-Line-Meßgerät nach einem der vorherigen Ansprüche, wobei das für den Liner verwendete Polyurethan im wesentlichen frei von Schwermetallen ist.

6. In-Line-Meßgerät nach einem der vorherigen Ansprüche, wobei der für die Herstellung des Polyurethans verwendete Katalysator Zinn enthält und wobei der Liner organisch, insbesondere aliphatisch, gebundenes Zinn aufweist.

7. In-Line-Meßgerät nach einem der vorherigen Ansprüche, wobei das für den Liner verwendete Polyurethan im wesentlichen frei von Aminen ist.

8. In-Line-Meßgerät nach einem der vorherigen Ansprüche, wobei der Liner eine Dicke von weniger als 5 mm, insb. weniger als 3 mm aufweist.

9. In-Line-Meßgerät nach einem der vorherigen Ansprüche, wobei das Meßrohr eine Nennweite aufweist, die kleiner oder gleich 2000 mm ist.

10. In-Line-Meßgerät nach einem der vorherigen Ansprüche, wobei das Meßrohr eine Nennweite aufweist, die größer oder gleich 100 mm ist.

11. In-Line-Meßgerät nach einem der vorherigen Ansprüche, wobei der Meßaufnehmer umfaßt:
- eine am Meßrohr (1) angeordnete Magnetkreisanordnung zum Erzeugen und Führen eines magnetischen Feldes, das im strömenden Fluid ein elektrisches Feld induziert, und
- Meßelektroden (31, 32) zum Abgreifen von im strömenden Fluid induzierten elektrischen Spannungen.

12. Verfahren zum Herstellen eines Meßrohrs für ein In-Line-Meßgerät für Messungen im Trinkwasserbereich, insb. eines In-Line-Meßgeräts nach einem der vorherigen Ansprüche, welches Verfahren folgende Schritte umfaßt:
- Bilden eines flüssigen Mehrkomponentensystems, das ein Präpolymer, einen, insb. zweiwertigen, Alkohol und einen Katalysator aufweist, wobei der Katalysator, insb. von einem physiologisch unbedenklichen Metall gebildete, metall-organische Verbindungen, nämlich Zinn-organo Verbindungen aufweist,
- Aufbringen des flüssigen Mehrkomponentensystems auf eine Innenwand eines als Bestandteil des Meßrohrs dienenden, insb. metallischen, Trägerrohrs und Aushärtenlassen des Mehrkomponentensystems auf der Innenwand des Trägerrohrs zum Bilden eines das fertige Meßrohr innen auskleidenden Liners.

13. Verfahren nach Anspruch 12, wobei der Katalysator zinn-organo Verbindungen, insb. Di-n-octylzinn-Verbindungen, aufweist.

14. Verfahren nach dem vorherigen Anspruch, wobei es sich bei dem Katalysator um ein Di-n-octylzinndilaurat und/oder ein Di-n-octylzinndimalinat handelt.

15. Verfahren nach einem der vorherigen Ansprüche 12 bis 14, wobei das Präpolymer, insb. aliphatische und/oder aromatische, Ether-Gruppen aufweist.

16. Verfahren nach einem der vorherigen Ansprüche 12 bis 15, wobei das Präpolymer aromatische oder aliphatische Isocyanat-Gruppen aufweist.

17. Verfahren nach dem vorherigen Anspruch, wobei das Präpolymer mindestens zwei reaktive NCO-Gruppen aufweist.

18. Verfahren nach einem der vorherigen Ansprüche 12 bis 17, wobei der Alkohol mindestens zwei funktionelle OH-Gruppen aufweist.

19. Verfahren nach dem vorherigen Anspruch, wobei es sich bei dem Alkohol um ein Diol, insb. ein Butandiol handelt.

20. Verfahren nach einem der vorherigen Ansprüche 12 bis 19, durchgeführt bei einer Verarbeitungstemperatur von weniger als 100°C, insb. bei etwa 25°C.

21. Verwenden eines, insb. gemäß dem Verfahren nach einem der Ansprüche 12 bis 20 hergestellten, In-Line-Meßgeräts nach einem der Ansprüche 1 bis 11 zum Messen eines Durchflusses und/oder einer Strömungsgeschwindigkeit von in einer Rohrleitung strömendem Wasser, insb. Trinkwasser.

## Claims

1. In-line measuring device, particularly a flowmeter, for measuring drinking water flowing through a pipe, said in-line measuring device comprising a sensor, particularly an electromagnetic or acoustic sensor, with a measuring tube which is inserted in the course of the pipe and is lined inside by a liner, said measuring tube used to conduct the fluid to be measured, wherein the liner is made from a polyurethane, which is produced using a catalyst featuring organometallic compounds, namely organostannic compounds, and wherein metals introduced into the liner with the catalyst and remaining in the liner are bonded chemically, particularly atomically and/or physically, to carbon chains formed in the liner.

2. In-line measuring device as claimed in Claim 1, wherein the polyurethane is produced on the basis of a multi-component system comprising a prepolymer, notably a bivalent alcohol, and the catalyst.

3. In-line measuring device as claimed in one of the previous claims, wherein the polyurethane contains ether groups, notably aliphatic groups.

4. In-line measuring device as claimed in one of the previous claims, wherein the polyurethane contains aromatic compounds.

5. In-line measuring device as claimed in one of the previous claims, wherein the polyurethane used for the liner is essentially free from heavy metals.

6. In-line measuring device as claimed in one of the previous claims, wherein the catalyst used to make the polyurethane contains tin and wherein the liner has organically bonded tin, particularly aliphatically bonded tin.

7. In-line measuring device as claimed in one of the previous claims, wherein the polyurethane used for the liner is essentially free from amines.

8. In-line measuring device as claimed in one of the previous claims, wherein the liner has a thickness of less than 5 mm, particularly less than 3 mm.

9. In-line measuring device as claimed in one of the previous claims, wherein the measuring tube has a nominal diameter that is less than or equal to 2000 mm.

10. In-line measuring device as claimed in one of the previous claims, wherein the measuring tube has a nominal diameter that is greater than or equal to 100 mm.

11. In-line measuring device as claimed in one of the previous claims, wherein the sensor comprises:
- a magnetic circuit arrangement arranged on the measuring tube (1) for generating and conducting a magnetic field which induces an electrical field in the flowing fluid, and
- measuring electrodes (31, 32) for sensing electrical voltages induced in the flowing fluid.

12. Process for manufacturing a measuring tube for an in-line measuring device for measuring in the drinking water sector, particularly an in-line measuring device as claimed in one of the previous claims, said process comprising the following steps:
- Formation of a liquid multi-component system, which has a prepolymer, an alcohol, particularly a bivalent alcohol, and a catalyst, wherein the catalyst has organometallic compounds, particularly made from a physiologically neutral metal, namely organostannic compounds,
- Application of the liquid multi-component system on an inner wall of a, particularly metal, support tube which acts as an integral part of the measuring tube and allowing the multi-component system to set on the inner wall of the support tube to form a liner that lines the inside of the finished measuring tube.

13. Process as claimed in Claim 12, wherein the catalyst has organostannic compounds, particularly di-n-octyltin compounds.

14. Process as claimed in the previous claim, wherein the catalyst is a di-n-octyltin dilaurate and/or a di-n-octyltin dimalinate.

15. Process as claimed in one of the previous Claims 12 to 14, wherein the prepolymer has ether groups, particularly aliphatic and/or aromatic groups.

16. Process as claimed in one of the previous Claims 12 to 15, wherein the prepolymer has aromatic or aliphatic isocyanate groups.

17. Process as claimed in the previous claim, wherein the prepolymer has at least two reactive NCO groups.

18. Process as claimed in one of the previous Claims 12 to 17, wherein the alcohol has at least two functional OH groups.

19. Process as claimed in the previous claim, wherein the alcohol is a diol, particularly a butanediol.

20. Process as claimed in one of the previous Claims 12 to 19, performed at a processing temperature less than 100 °C, particularly around 25 °C.

21. Use of an in-line measuring device as claimed in one of the Claims 1 to 11, particularly one produced according to the process as claimed in one of the Claims 12 to 20, for measuring a flow and/or a flow velocity of a water, particularly drinking water, flowing through a pipe.

## Revendications

1. Appareil de mesure en ligne, notamment un débitmètre, destiné à la mesure d'une eau potable s'écoulant dans une conduite, lequel appareil de mesure en ligne comprend notamment un capteur magnéto-inductif ou acoustique avec un tube de mesure revêtu à l'intérieur d'un liner et inséré dans le tracé de la conduite, lequel tube sert au guidage du fluide à mesurer, tube pour lequel le liner est constitué d'un polyuréthane, qui est fabriqué à l'aide d'un catalyseur contenant des composés organométalliques, notamment des composés organostanniques, et pour lequel les métaux introduits dans le liner avec le catalyseur et restants dans ce liner sont liés chimiquement, notamment atomiquement et/ou physiquement à des chaînes carbonées formées dans le liner.

2. Appareil de mesure selon la revendication 1, pour lequel le polyuréthane est fabriqué sur la base d'un système multicomposant constitué d'un prépolymère, notamment un alcool bivalent, et du catalyseur.

3. Appareil de mesure selon l'une des revendications précédentes, pour lequel le polyuréthane contient des groupes d'éther, notamment aliphatiques.

4. Appareil de mesure selon l'une des revendications précédentes, pour lequel le polyuréthane contient des composés aromatiques.

5. Appareil de mesure selon l'une des revendications précédentes, pour lequel le polyuréthane utilisé pour le liner est pour l'essentiel exempt de métaux lourds.

6. Appareil de mesure selon l'une des revendications précédentes, pour lequel le catalyseur utilisé pour la fabrication du polyuréthane contient de l'étain et pour lequel le liner contient de l'étain lié organiquement, notamment aliphatiquement.

7. Appareil de mesure selon l'une des revendications précédentes, pour lequel le polyuréthane utilisé pour le liner est pour l'essentiel exempt d'amines.

8. Appareil de mesure selon l'une des revendications précédentes, pour lequel le liner présente une épaisseur inférieure à 5 mm, notamment inférieure à 3 mm.

9. Appareil de mesure selon l'une des revendications précédentes, pour lequel le tube de mesure présente un diamètre nominal inférieur ou égal à 2 000 mm.

10. Appareil de mesure selon l'une des revendications précédentes, pour lequel le tube de mesure présente un diamètre nominal supérieur ou égal à 100 mm

11. Appareil de mesure selon l'une des revendications précédentes, pour lequel le capteur comprend :
- un circuit magnétique disposé sur le tube de mesure (1), destiné à la création et au guidage d'un champ magnétique, qui induit un champ électrique dans le fluide en circulation, et
- des électrodes de mesure (31, 32) destinées au prélèvement de tensions électriques induites dans le fluide en circulation.

12. Procédé destiné à la fabrication d'un tube de mesure pour un appareil de mesure en ligne destiné aux mesures dans le domaine de l'eau potable, notamment un appareil de mesure en ligne selon l'une des revendications précédentes, lequel procédé comprend les étapes suivantes :
- Constitution d'un système multicomposant liquide, qui comporte un prépolymère, un alcool, notamment bivalent, et un catalyseur, pour lequel le catalyseur comprend des composés organométalliques constitués d'un métal physiologiquement neutre, notamment des composés organostanniques,
- Mise en place du système multicomposant liquide sur une paroi interne d'un tube-support, notamment métallique, faisant partie intégrante du tube de mesure, et observation d'un délai de durcissement du système multicomposant sur la paroi interne du tube-support pour la constitution d'un liner revêtant l'intérieur du tube de mesure fini.

13. Procédé selon la revendication 12, pour lequel le catalyseur comprend des composés organostanniques, notamment des composés de di-n-octylétain.

14. Procédé selon la revendication précédente, pour lequel il s'agit, concernant le catalyseur, d'un dilaurate de di-n-octylétain et/ou d'un dimalinate de di-n-octylétain.

15. Procédé selon l'une des revendications précédentes 12 à 14, pour lequel le prépolymère comprend des groupes d'éther, notamment aliphatiques et/ou aromatiques.

16. Procédé selon l'une des revendications précédentes 12 à 15, pour lequel le prépolymère comprend des groupes d'isocyanate aromatiques ou aliphatiques.

17. Procédé selon la revendication précédente, pour lequel le prépolymère comprend au moins deux groupes NCO réactifs.

18. Procédé selon l'une des revendications précédentes 12 à 17, pour lequel l'alcool comprend au moins deux groupes OH fonctionnels.

19. Procédé selon la revendication précédente, pour lequel il s'agit, concernant l'alcool, d'un diol, notamment d'un butanediol.

20. Procédé selon l'une des revendications précédentes 12 à 19, réalisé à une température de traitement inférieure à 100 °C, notamment d'env. 25 °C.

21. Utilisation d'un appareil de mesure en ligne selon l'une des revendications 1 à 11, notamment fabriqué conformément au procédé selon l'une des revendications 12 à 20, destiné à la mesure d'un débit et/ou d'une vitesse d'écoulement d'une eau, notamment une eau potable, s'écoulant dans une conduite.
